# EUROPEAN PATENT APPLICATION

(11) **EP 1 612 674 A2**
(43) Date of publication of application: **04.01.2006**
(21) Application number: 05076494.3
(22) Date of filing: 29.06.2005
(51) Int. Cl.: G06F 9/50

(54) **Method and system for admission control**

(30) Priority: 29.06.2004 EP 04076883
(71) Applicant: Nederlandse Organisatie voor Toegepast-Natuuurwetenschappelijk Onderzoek TNO, 2628 VK Delft (NL)
(72) Inventor: Gijsen, Bart Michel Magdalena, 2587 RB Den Haag (NL); Blom, Marcus Anthonius, 2273 VS Voorburg (NL); Meulenhoff, Pieter Jan, 9804 PW Noordhorn (NL); Van der Mei, Robert Douwe, 1066 HR Amsterdam (NL)
(74) Representative: Winckels, Johannes Hubertus F.

(57) **Abstract**

Method for handling an access request to an information processing system (5). It is detected whether or not the system is or threatens to be overloaded. When the system is overloaded or threatens to be overloaded, the kind of system overload is detected, the kind of requested access is detected and the kind of requested access is compared with the kind of system overload. If the kind of requested access is not deemed to contribute to the system overload the requested access is judged to be admissible. If the kind of requested access is deemed to contribute to the system overload the requested access may be judged to be not-admissible. Different service level indicators may be assigned to different clients. If access is deemed to contribute to the system overload, the requested access of clients having a relative high service level indicator may be given preference or priority over clients having a relative low service level indicator.

## Description

### FIELD OF THE INVENTION

The invention relates to a method for improved handling of an access request to an information processing system, e.g. a network server. Hereinafter the information processing system may be indicated as (web, Internet, network) server.

### BACKGROUND OF THE INVENTION

Nowadays, popular web servers can suffer from severe, albeit often only temporarily, server overload. Server overload will cause web-browsing performance to degrade in terms of increasing response times or even server unavailability. In e-commerce context, customers that are dissatisfied about overly long response times or unavailability of servers will cause a decrease in revenues. Therefore controlling web server performance will be essential for companies whose business relies on web services.

The prior art disclosure -hereinafter referred to as D1- "Web Server QoS Management by Adaptive Content Delivery" (IWQOS 1999, p. 216-225, www.hpl.hp.com/personal/Nina_Bhatti/papers/iwqos99.pdf) discloses a method and system for the processing access requests to an information processing system, aiming to improve state-of-the-art admission control systems by means of *content adaptation,* viz. e.g. by compressing (large) GIF and JPG images, reducing the number of embedded objects, reducing local links etc., in accordance with the system's load conditions, using a number (M) of multiple content trees having different adaptation (degradation) rates, to be compared with an abstract parameter G which represents the severity of the required content adaptation: G=M indicates that all requests are to be served with the highest quality content; G=0 means all requests must be rejected. Additionally, use is made of "virtual servers" for serving the various requests, guided by a load classifier, resulting from the relevant requested content. D1 will be discussed further at the end of next paragraph.

### SUMMARY OF THE INVENTION

It is an object of the present invention to provide a method for handling access requests whereby the available capacity of various resources are considered in the further handling of an access request.
The object is achieved in a method for handling an access request to an information processing system (5), the method comprising:
detecting an available capacity level corresponding to system (5) resources,
predicting the system (5) resource capacity requirements relating to the access request,
comparing the available capacity level of the system resources with the system resource requirements of the access request
establishing at least one decision criterion based on the comparison step results,
deciding on the admissibility of the access request, based on the at least one decision criterion, whereby the step detecting an available capacity level comprises detecting a available capacity level for each one of a plurality of system resource objects,
the step predicting the system (5) resource capacity requirements relating to the access request comprises
   - classifying the request into a request type,
   - selecting from a table the resource object capacity requirements based on the request type,
the step establishing at least one decision criterion comprises a decision criterion for each of the plurality of resource objects,
the step comparing the available capacity level of the system resources with the system resource requirements of the access request comprises comparing for each one of the plurality of resource objects, the available capacity level with the capacity requirement of the access request.

In an embodiment according to the invention, the step deciding on the admissibility of the access request comprises determining an action based on an admission enforcement table.

In a further embodiment, the plurality of resource objects comprise at least one of physical and virtual resources.

In a further embodiment according to the invention, the physical resources comprise at least one of CPU load, and communication bandwidth,.

In a further embodiment according to the invention, the non-physical resources comprise at least one of a number of database reads per time unit, a number of database writes per time unit, a number of requests per time unit, and a number of simultaneous sessions.

In a further embodiment according to the invention, the information processing system comprises system control means , interface means and client application means, the method comprising the next steps when the system is overloaded or threatens to be overloaded:
it is detected whether the system control means, the interface means or the relevant client application means are or are threatened to be overloaded;
it is detected whether the requested access will load the system control means, the interface means or the relevant client application means;
if the requested access is not deemed to contribute to the overload of the relevant system means, the requested access is judged to be admissible and/or if the requested access is deemed to load the relevant system means, the requested access is judged to be not-admissible.

In a further embodiment according to the invention, several clients requesting for access to the information processing system and service level indicators being assigned to those clients, the method comprising that if the kind of requested access is deemed to contribute to the system overload, the requested access of clients having a relative high service level indicator is given preference or priority over clients having a relative low service level indicator.

In a further embodiment according to the invention, the requested access, deemed to contribute to the system overload, is judged to be admissible for clients having a relative high service level indicator and/or not-admissible for clients having a relative low service level indicator.

In a further embodiment according to the invention, information regarding all access requests and/or access requests which are not judged to be admissible is logged by the information processing system.

In a further embodiment according to the invention, a client, requesting for access to the information processing system, is notified if the access request is not judged to be admissible.

The object of the invention is also achieved in a system for handling an access request to an information processing system , comprising processing means and memory means, whereby the apparatus is communicatively connected to the information processing system, whereby the apparatus is further connected to a network for transmitting the access request, characterised by that the apparatus is adapted to perform the above described method.

The object of the invention is also achieved in a server arranged for servicing access requests, further comprising a system for an access request as described in the paragraph above.

The method and system proposed is based on the following considerations. Server overload will lead to degradation of browsing performance for *all* active users. The impact of server overload on user perception could be reduced by deploying selective admission control, e.g. user selective admission control. User selective admission control means that server-access is denied to *some* users in order to let the other users browse at a satisfactory performance level. With such a mechanism one will improve the user perceived performance level and be able to postpone web server investments, leading directly to lower net present value of server investments.

The aim of the method proposed here is to maximise the number of users that can be served with satisfactory performance during server overload periods. To that end, the method for handling an access request to a server is improved when, firstly, it is detected whether or not the server is or threatens to be overloaded. When indeed the server is overloaded or threatens to be overloaded, the kind of that server overload is detected, as well as the kind of requested access. Subsequently, the kind of (threatening) server overload and the kind of the requested access are compared. If the kind of requested access is not deemed to contribute to the server overload the requested access is judged to be admissible ("OK") and/or ―reversely- if the kind of requested access is deemed to contribute to the server overload the requested access is judged to be not-admissible ("NOK").

So, besides detection of a (threatening) server overload also the *kind* of overload is detected. E.g. the overload situation may be due to a (threatening) overload of the server's control means (e.g. its operating system etc.), the server's interface means like nodes, routers, modems, protocol converters etc. via which clients are connected to the server, or an overload of the (resources for) applications etc. installed at the server, which may be called by clients.

On the other hand, the kind of the requested access is detected. For instance a service may be requested like a database search, an image download, a streaming music or video service, or a banking service.

Both, the kind of (threatening) server overload and the kind of the access request are compared. If the kind of requested access is not deemed to contribute to the server overload, the requested access may be judged to be admissible. Reversely, if the kind of requested access is deemed to contribute to the server overload the requested access may be judged to be not-admissible.

Different clients (users) may have arranged different "service level agreements" (SLAs) with the respective server or service (provider). The SLA may rule rights and obligations of the respective client and server, e.g. with respect to quality of service, priority, maximum amount of data, bit rate, tariffs, etc. Based on the SLA, one or more service level indicators may be assigned to the clients, which service level indicators may be read or detected by the server e.g. at arrival of the client's access request.

If different clients, requesting for access to the server, have different service level indicators, it may preferred that, if the kind of requested access is deemed to contribute to the server overload, the requested access of clients having a relative high service level indicator is given preference or priority over clients having a relative low service level indicator. The requested access may be judged to be admissible for clients having a relative high service level indicator and/or -reversely- be judged not-admissible for clients having a relative low service level indicator.

Referring to prior art document D1, the following may be noted. As an example, a request may be classified to load both a server's CPU and its transmission capacity. The admission criterion according to the present invention as outlined here up has to realize that the request is rejected if the CPU or the transmission capacity or both are overloaded. In D1 overload is determined per virtual server. So, for the detection of congestion of both of said resources, two virtual servers have to be appointed, e.g. one virtual server 'CPU' and a second virtual server 'Transmission Capacity'. For both virtual servers the request rate and delivered bandwidth is measured (it is unclear what this exactly might be for the 'CPU'), as described in D1. Then the use (U) is calculated per virtual server according to a formula (formula 1 in D1) and next the output parameter G is calculated which determines the degree of content adaptation. This way it should be determined if CPU or the transmission capacity would be overloaded, or both. However, in the configuration known from D 1 it appears to be impossible to indicate (classify) that one request claims the use of more than one virtual server, viz. e.g. the virtual server 'CPU' and the virtual server 'Transmission Capacity' in this example. Therefore it is not possible to adapt the relevant content or (in an extreme case that G=0) to reject the relevant request if either the CPU or the transmission capacity or both will be overloaded. The reason of this shortcoming is that in D1 it is not possible to set up a virtual server which represents part of the content of e.g. an Internet site (request always points to a specific part of content). So, the known system is content oriented and not resource oriented. The present invention's method and system, on the contrary, are resource oriented, which is much more appropriate due to the fact that exactly the server's resources have to be protected against overload. So the present invention differs from the configuration known from D 1 and constitutes a sound improvement to it.

### FIGURES

Figure 1 shows an embodiment of a system according to the invention.
Figure 2 shows an embodiment of a method according to the invention.

### DETAILED DESCRIPTION

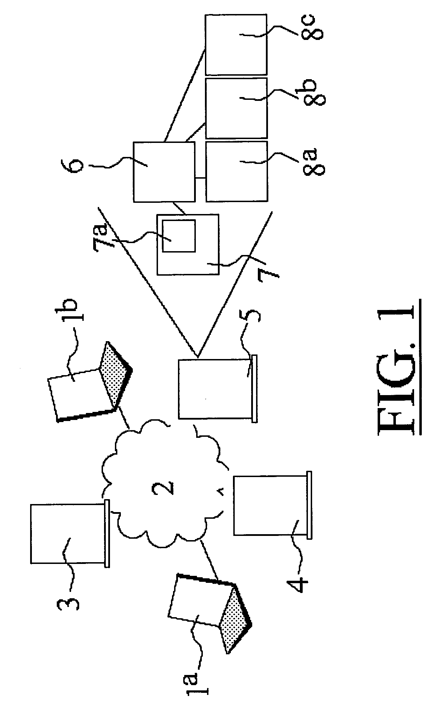

Figure 1 shows user or client terminals 1a and 1b, the Internet 2 and servers 3, 4 and 5. The terminals 1a and 1b may send, via the Internet 2, an access request to server 5. The server 5 may comprise server control means 6, interface means 7 and application means or modules 8, e.g. comprising of a database application 8a, a streaming audio application 8b and a banking application 8c. The application modules 8 are under general control of the server control means 6 and make use of the interface means 7 for the exchange of data with other servers (e.g. 3 and 4) and the terminals 1a and 1b.

The user of terminal 1a may wish to use the banking application 8c as implemented in server 5. To that end terminal 1a transmits an access request to server 5. A request handler module 7a within the interface means 7 may be fit to detect -either continuously or after reception of the access request- whether or not the server is or threatens to be overloaded, e.g. when the server load is more than 90%. When the server is or threatens to be overloaded indeed, the request handler 7a detects the kind of server overload, e.g. a (threatening, near-) overload in the interface means 7 itself, in the general control means 6 or in one of the applications, the database application 8a, the streaming audio application 8b or in the banking application. Moreover, the request handler 7a detects, guided by e.g. request parameters, addresses etc., the kind of requested access, e.g. a request to access the banking application 8c. Both, the kind of requested access and the kind of server overload are compared to one another. If the client terminal 1a requests for access to the banking application 8c and the streaming audio application 8b is (nearly) overloaded, the handler 7a may consider that, as the kind of requested access (viz. to the banking application 8c) is not deemed to contribute to the server overload, the requested access is admissible. If, however, the handler 7a "knows" or detects that the (requested) banking application 8c is threatened by overload and the requested access is thus deemed to contribute to the server overload, the handler 7a will consider the requested access to be not-admissible and will refuse the requested access.

Different clients (users), e.g. using different terminals 1a and 1b, may have arranged different "service level agreements" (SLA) with the respective server or service, e.g. with respect to quality of service, priority, maximum amount of data, bit rate, tariffs, etc. Based on the SLA, one or more service level indicators may be assigned to the clients, users or terminals 1. The service level indicators may be read or detected by the server 5 when e.g. at arrival of the access request from terminals 1a and 1b respectively.

Suppose that access to the server 5 is requested by a terminal 1a, e.g. used by a user A -for example detected by A's user profile data or other characteristics- having a relative high service level indicator e.g. with respect to the quality of service. If it is detected, by the request handler 7a, that the kind of access requested by user A, e.g. pointing to use application 8a, is deemed to contribute to the overload of the server (caused by the relevant server means or components, e.g. the server's interface or the selected application 8a) the requested access of user A may is given preference or priority over a user B, requesting access to the same server 5 (and e.g. to the same application 8a), having a relative low service level indicator. For this reason, in this case the access requested by user A may be judged to be admissible to the server 5 and server means (like application 8a), based at A's high service level indicator, while a request for access done by user B, having a relative low service level indicator, is judged not-admissible to the requested service application 8a.

It is noted that the request handler 7a may be internal, as shown in figure 1, or be comprised by an external server, e.g. server 3. In the latter case server 5 has to be configured that at reception of a request, the functionality of handler 7a as discussed above, is performed by that external request handler. Further, it is noted that the server 5 may comprise logging means, e.g. a logging database, to which all (threatening) overload occurrences, including e.g. their kind and/or cause, time stamp, may be stored. Also the admitted and/or not-admitted access requests may be stored (logged). When an access request is not admitted, the requesting client 1a or 1b may be notified that his/her request is refused due to an (imminent) overload of the requested resources at the server's side.

The method makes sure that a number of congestion criteria, that can be specified by the user, is always met. Examples of such congestion detection criteria are: the arrival frequency of a specific type of requests exceeds a threshold value, the overall response time for requests exceeds a threshold value, the number of simultaneously active sessions exceeds a threshold value, the server's CPU utilization exceeds a threshold value or another 'application' triggers activation of admission control. With each congestion criterion a resource object is associated, for which the user specifies a measurable metric. The user also specifies for which range of metric values he defines the resource object as overloaded.

Hereinafter the method and the operation of the relevant system -especially the servers 5 and/or 3- will be outlined more in detail.

The server classifies arriving requests by specifying the relation between any information contained in the request message and its corresponding request type. The server enables the user to specify this relation a-priori, for example in a configurable table, and enables the user to modify the specified relation. Further, the server enables the user to specify for any request type how much additional load one request of the corresponding type imposes on any combination of resource object(s). Alternatively, the user can specify how the imposed load of each request type on each of the resources can be derived from monitoring data that is available via input modules of the server. Then, the admission of an arriving request is based on the following admission rule. For each arriving request a load prediction is calculated for each of the resource types. The load prediction is calculated as the measured metric value, plus the additional load per request that was specified by the user. A request is admissible if and only if for all resource objects to which the request imposes an additional load (as specified by the user) the predicted load lies within the range of overload values (as specified by the user in the congestion criteria).

If a request is not admissible, then the server can take the following admission decisions: discard the request, or forward the request. If the server forwards the request, the request may forward the request to the intended receiver (as specified in the request message), or to an alternative receiver (to be specified by the user). In any case the server may send a notification back to the sender of the request and will log the request as a not admissible request.

The decision to discard or forward the request may depend on information in the request message and information about the requestor (user profile information) and on information about the session status of the requestor. The relation between information in the request message and information about the user and the admission decision for each not admissible requests is specified by the user in admission enforcement rules. The server enables the user to specify the admission enforcement rules a-priori, for example in a configurable table, and enables the user to modify the specified rules.

The following tables are configurable by the user of the (Web) Admission Control method:

**Table 1. Request classification table (ReqClass)**

| Requestor | URL | Request type |
|---|---|---|
| * | *.cgi | server script |
| * | *.jsp | database query |
| * | *.gif | picture |
| * | *.htm | text |
| 139.63.* | * | trusted |

• Table 1, the ReqClass table illustrates how field from request messages (IP source address as indicator for the requestor and the requested URL) are used to assign arriving requests to Request types specified by the user.

**Table 2. Resource objects table (ResObj)**

| Resource object | Value | Dimension | Overload threshold 1 | Overload threshold 2 |
|---|---|---|---|---|
| CPU | *24* | % busy during last minute | 75 | 90 |
| Database(1) | *3* | reads during last minute | 10 | |
| Database(2) | *1* | writes during last minute | 5 | |
| Communication | *24* | MB in last 5 minutes | 2x150 | |
| Request rate | *63* | requests in last 3 minutes | 100 | 150 |
| Simultaneous sessions | *85* | Number of simultaneous sessions | 250 | |

• Potentially more than two thresholds may be specified by the user. These distinct threshold values can be used in the admission enforcement rules table.
• If more than one metric is relevant for indicating the load status of a resource, then more than one line can be added to table 2, the ResObj table, with two distinct resource object names. See for example the two lines for the database resource. The load status of the physical database resource is denoted by the resource objects Database(1) and Database(2).
• The dimension field in the table above is for information purpose. It does not actually play a role in the Admission Control method.
• The Value fields are not configured by the user, but they are automatically, regularly updated. The way in which the Value field is kept up to date is not considered here, since it is not part of the invention. One option to keep the values up to date is by enabling the user to specify which monitoring interface of the server shall be used for regular updating of the Value field. As an example, the CPU Usage field from the windows task monitor could be used to fill Value field for the CPU dimension %busy during last minute.

**Table 3. Prediction table (Pred)**

| Request type | Resource object | Usage | Prediction |
|---|---|---|---|
| server script | CPU | 0.04 seconds of processing | ResObj.value + Usage / 60 |
| server script | Request rate | 1 | ResObj.value + Usage |
| picture | Communication | 1.4 MB | ResObj.value + Usage |
| picture | Request rate | 1 | ResObj.value + Usage |
| text | Request rate | 1 | ResObj.value + Usage |
| * | Simultaneous sessions | 1 | IF Sessionheld = True THEN |
| | | | ResObj.value |
| | | | ELSE ResObj.value + Usage |

• Table 3, the Prediction table, comprises a function that takes a resource object and metric as input parameters and calculates a prediction based on values in the fields Value from the ResObj table and Usage from the ReqUseRes table.

**Table 4. Active session table (ActSes)**

| Session client | Source IP | Timestamp last request |
|---|---|---|
| *123* | *24.34.35.672* | *2003-03-24* |
| | | *12:12.57* |
| *125* | *54.31.56.867* | *2003-03-24* |
| | | *12:13. 04* |
| *126* | *24.34.35.672* | *2003-03-24* |
| | | *12:12.56* |
| *128* | *41.23.35.981* | *2003-03-24* |
| | | *12:13.08* |

• The values in table 4, the Active session table, are not configured by the user, but they are dynamically kept up to date by the Admission Control method. Typically, a session is started if a first request arrives from a client that does not hold a session yet. If the request (and session) is admitted, then a new session number is generated and added as, for example, a cookie to the request message. Further, a new entry in the session table is created, along with the current time stamp.
• Each time another request arrives at the server, the cookie and IP source address are extracted from the request message and the Active session table is searched to find out whether the request belongs to an active session.
• A session may be terminated if for a certain amount of time no additional requests arrive at the server. The user may configure this time-out value.

**Table 5. Requestor profile information table (SLA)**

| Requestor | Username | Password | Subscription |
|---|---|---|---|
| 139.63.192.* | Me | Hello | Premium |
| 24.517.25.01 | You | hello2 | Gold |
| 124.57.925.101 | Him | Bingo | Silver |
| 42.5.101.* | Her | Lala | Bronze |

**Table 6. Admission Enforcement Rules table (AdmEnf)**

| Condition 1 | Condition 2 | Action | Notify |
|---|---|---|---|
| Pred(server script, CPU) > ResObj(CPU).overload threshold 2 | | Reject | Yes |
| Pred(server script, CPU) > ResObj(CPU).overload threshold 1 | Sessionheld = True | Admit | No |
| Pred(server script, CPU) > ResObj(CPU).overload threshold 1 | Sessionheld = False | Redirect | No |
| Pred(server script, Request rate) > ResObj(Request rate).overload threshold 1 | SLA(request.requestor).subscription = Premium | Admit | No |
| Pred(server script, Request rate) > ResObj(Request rate).overload threshold 1 | SLA(request.requestor).subscription ◊ Premium | Reject | Yes |
| Pred(server script, Request rate) > ResObj(Request rate).overload threshold 2 | | Reject | Yes |

• An admission rule may contain more than two preconditions.
• The interpretation of the admission rules is as follows. Each line in the table 6 corresponds to one rule. If all conditions specified in the rule hold, then the specified action in the rule will be performed by the method. Further, if the notify flied is marked with Yes, then the requestor will be sent a notify message.

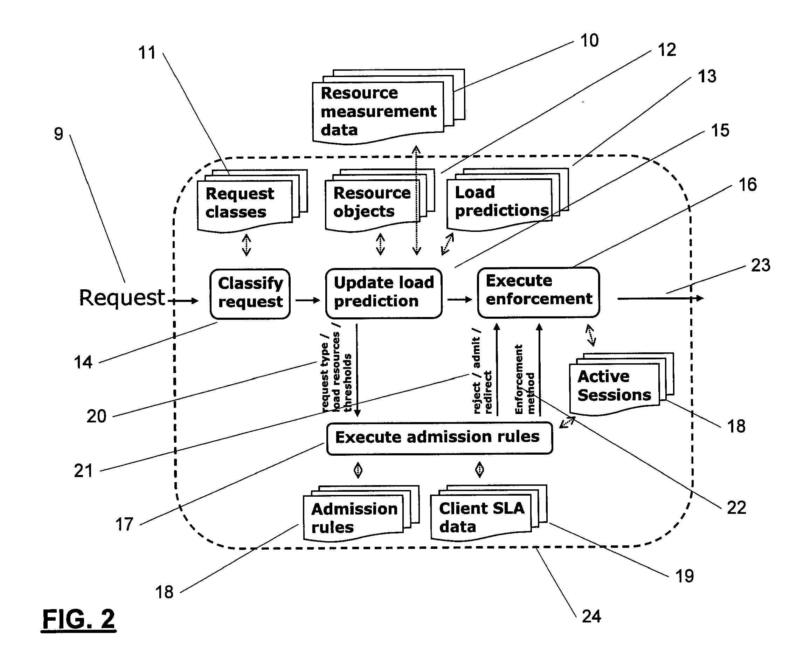

Admission Control functionality is executed directly before the protected web server functionality. The following flow according to fig. 2, roughly indicates how arriving requests are processed by the Admission Control method.

The following pseudo-code illustrates the operation of the Admission Control method, to be executed by the server 5 and/or 3 upon arrival of a request, and in particular the relation with the user configurable admission control information:

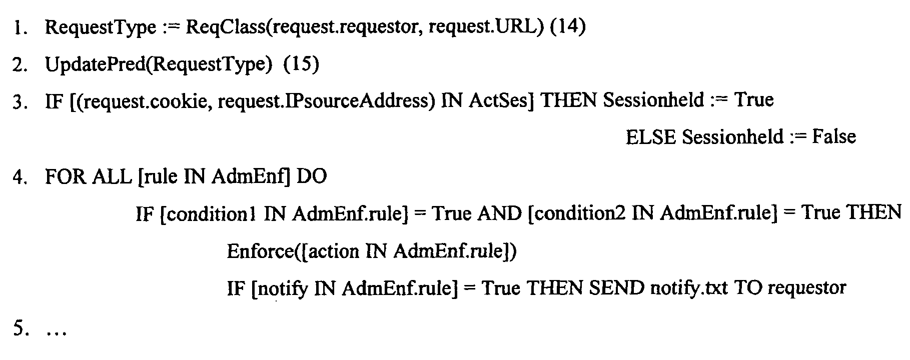

In this pseudo code illustration actions to update monitoring values, registration of admission decisions, etc. is left out of scope. Also, the functions 'UpdatePred()' 15 and 'Enforce()' function 16 is not worked out in detail. The function "UpdatePred()' takes care of updating the resource load predictions, as specified by the user in the field 'prediction' in the table Pred. The function 'Enforce()' 16 performs the action specified by the user in the field Action of the AdmEnf table. It will amongst others update the table of active sessions, if the arriving request did not belong to a session yet.

Admission Control actions performed at other time epochs than request arrival
- regular update Resource objects measured values 10
- occasional modification of tables by user
- incidental trigger to enforce a congestion independent enforcement action (manually by web master, or automated trigger by (web server) applications)

## Claims

1. Method for handling an access request to an information processing system (5), the method comprising:
- detecting an available capacity level corresponding to system (5) resources,
- predicting the system (5) resource capacity requirements relating to the access request,
- comparing the available capacity level of the system resources with the system resource requirements of the access request
- establishing at least one decision criterion based on the comparison step results,
- deciding on the admissibility of the access request, based on the at least one decision criterion,
**characterised by**
- the step detecting an available capacity level comprises detecting a available capacity level for each one of a plurality of system resource objects,
- the step predicting the system (5) resource capacity requirements relating to the access request comprises
i) classifying the request into a request type,
ii) selecting from a table the resource object capacity requirements based on the request type,
- the step establishing at least one decision criterion comprises a decision criterion for each of the plurality of resource objects,
- the step comparing the available capacity level of the system resources with the system resource requirements of the access request comprises comparing for each one of the plurality of resource objects, the available capacity level with the capacity requirement of the access request.

2. Method according to claim 1, wherein the step deciding on the admissibility of the access request comprises determining an action based on an admission enforcement table.

3. Method according to claim 1 or 2, wherein the plurality of resource objects comprise at least one of physical and virtual resources.

4. Method according to any of the preceding claims, wherein the physical resources comprise at least one of CPU load, and communication bandwidth,.

5. Method according to any of the preceding claims, wherein the non-physical resources comprise at least one of a number of database reads per time unit, a number of database writes per time unit, a number of requests per time unit, and a number of simultaneous sessions.

6. Method according to any of the preceding claims, the information processing system (5) comprising system control means (6), interface means (7) and client application means (8a, 8b, 8c), the method comprising next steps when the system (5) is overloaded or threatens to be overloaded:
- it is detected whether the system control means, the interface means or the relevant client application means are or are threatened to be overloaded;
- it is detected whether the requested access will load the system control means, the interface means or the relevant client application means;
- if the requested access is not deemed to contribute to the overload of the relevant system means, the requested access is judged to be admissible and/or if the requested access is deemed to load the relevant system means, the requested access is judged to be not-admissible.

7. Method according to any of the preceding claims, several clients requesting for access to the information processing system (5) and service level indicators being assigned to those clients, the method comprising that if the kind of requested access is deemed to contribute to the system overload, the requested access of clients having a relative high service level indicator is given preference or priority over clients having a relative low service level indicator.

8. Method according to any of the preceding claims, the requested access, deemed to contribute to the system overload, is judged to be admissible for clients having a relative high service level indicator and/or not-admissible for clients having a relative low service level indicator.

9. Method according to any of the preceding claims, comprising that information regarding all access requests and/or access requests which are not judged to be admissible are logged by the information processing system (5).

10. Method according to any of the preceding claims, comprising that a client, requesting for access to the information processing system (5), is notified if the access request is not judged to be admissible.

11. System for handling an access request to an information processing system (5), comprising processing means and memory means, whereby the apparatus is communicatively connected to the information processing system, whereby the apparatus is further connected to a network for transmitting the access request , **characterised by** that the apparatus is adapted to perform the steps of claims 1 - 10.

12. A server arranged for servicing access requests, further comprising a system for handling an access request according to claim 11.
